# EUROPEAN PATENT APPLICATION

(11) **EP 3 054 334 A1**
(43) Date of publication of application: **10.08.2016**
(21) Application number: 16153958.0
(22) Date of filing: 02.02.2016
(51) Int. Cl.: G02B 7/10

(54) **OPTICAL EQUIPMENT**

(30) Priority: 03.02.2015 JP 2015018947
(71) Applicant: Ricoh Imaging Company, Ltd., Tokyo 143-8555 (JP)
(72) Inventor: TERAHARA, Daisuke, Tokyo Tokyo 143-8555 (JP)
(74) Representative: Ablett, Graham Keith

(57) **Abstract**

Optical equipment comprises a first holding unit 9 that holds a first optical element L2; and a second holding unit 12 that holds a second optical element L4. The first holding unit and the second holding unit are provided to be movable in an optical axis direction so as to allow the optical equipment to reduce a length in the optical axis direction. The first holding unit is configured to be driven by a driving unit in the optical axis direction; and the second holding unit is coupled to the first holding unit in regard to the optical axis direction such that the second holding unit is allowed to move integrally with the first holding unit and is allowed to move relatively to the first holding unit.

## Description

### Background of the Invention

The present invention relates to optical equipment configured to contract in an optical axis direction during a non-photographing state to achieve enhanced portability, and particularly to optical equipment suitably applied for a camera or a lens barrel.

As one example of a plurality of types of optical equipment, such as an image capturing apparatus (e.g., a digital camera) for capturing a still image or a moving image or a lens barrel used for such an image capturing apparatus, a lens barrel configured to contract in an optical axis direction during a non-photographing state to enhance portability has been proposed. Japanese Patent Provisional Publication No. 2011-154113A (hereafter, referred to as patent document 1) describes a lens barrel configured such that a variator lens holding frame and a compensator lens holding frame are respectively pressed by coil springs in an optical axis direction, and these lens holding frames are caused to contact cam surfaces of a variable power cam frame through use of such pressing forces. During a photographing operation, both of the variator lens and compensator lens holding frames are moved by the variable power cam frame in the optical axis direction to change power. In a non-photographing state, both of the variator lens and compensator lens holding frames are forcibly moved in the optical axis direction toward a relay lens holding frame against pressing forces of the coil springs acting respectively on the variator lens and compensator lens holding frames so that the lens barrel contracts in the optical axis direction.

### Summary of the Invention

According to the technique described in the patent document 1, a relay lens is configured as a variable power lens system not moving in the optical axis direction during the photographing operation, and a variator lens is configured as a variable power lens system moving in the optical axis direction without regard to the relay lens when the power is changed. Therefore, if the technique described in the patent document 1 is applied to a variable power lens system in which a relay lens is moved during changing of power, in particular a variable power lens system in which changing of power is performed while maintaining an interval between a variator lens and a relay lens in the optical axis direction, it is difficult to maintain the interval between the variator lens and the relay lens. That is, since the technique described in the patent document 1 does not provide a configuration for maintaining the interval between the variator lens and the relay lens in the optical axis direction, there may be a case where the interval between the variator lens and the relay lens in the optical axis direction varies during changing of power. In such a case, it becomes difficult to maintain high variable power characteristics.

The present invention is advantageous in that it provides optical equipment capable of enhancing optical performance while keeping an interval in an optical axis direction between optical elements (e.g., a variator lens and a relay lens) arranged along an optical axis constant.

According to an aspect of the invention, there is provided optical equipment, comprising: a first holding unit that holds a first optical element; and a second holding unit that holds a second optical element. In this configuration, the first holding unit and the second holding unit are provided to be movable in an optical axis direction so as to allow the optical equipment to reduce a length in the optical axis direction. The first holding unit is configured to be driven by a driving unit in the optical axis direction. The second holding unit is coupled to the first holding unit in regard to the optical axis direction such that the second holding unit is allowed to move integrally with the first holding unit and is allowed to move relatively to the first holding unit.

With this configuration, it becomes possible to enhance optical performance (e.g., variable power characteristics) of the optical equipment while keeping an interval in an optical axis direction between the first optical element and the second optical element (e.g., a compensator lens and a relay lens).

In at least one aspect, at least one of the first holding unit and the second holding unit may have a position restriction mechanism formed to restrict relative movement of the first holding unit and the second holding unit in a direction of moving away from each other in regard to the optical axis direction.

In at least one aspect, the first holding unit may have a plurality of guide pieces arranged along a circumferential direction of the first holding unit. Each of the plurality of guide pieces may be formed to project in the optical axis direction. The second holding unit may have a plurality of position restriction pieces arranged along a circumferential direction of the second holding unit, each of the plurality of position restriction pieces being formed to project in the optical axis direction. The second holding unit may be held by the plurality of guide pieces of the first holding unit at the plurality of position restriction pieces.

In at least one aspect, each of the plurality of guide pieces may have a guide projection formed at a tip of the each of the plurality of guide pieces. Each of the plurality of position restriction pieces may have a position restriction part formed at a tip of the each of the plurality of position restriction pieces to contact the guide projection of a corresponding one of the plurality of guide pieces in the optical axis direction. In this case, the guide projection and the position restriction part constitute the position restriction mechanism.

In at least one aspect, the second holding unit may be held on the first holding unit in a state where an outer circumferential surface of each of the plurality of position restriction pieces contacts, in a radial direction, an inner diameter end of the guide projection of a corresponding one of the plurality of guide pieces when the guide projection contacts the position restriction part in the optical axis direction.

In at least one aspect, in a state where the guide projection is separated from the position restriction part in the optical axis direction, an outer circumferential surface of each of the plurality of position restriction pieces may be separated, in a radial direction, from an inner diameter end of the guide projection of a corresponding one of the plurality of guide pieces.

In at least one aspect, the optical equipment may further comprise a spring member disposed to cause the second holding unit to be separated from the first holding unit in the optical axis direction. In this case, the guide projection and the position restriction part contact with each other in the optical axis direction by a pressing force of the spring member.

In at least one aspect, the first holding unit may have a pressing member disposed to elastically contact the second holding unit and to press the second holding unit toward a direction perpendicular to the optical axis direction.

In at least one aspect, in an extended state of the optical equipment, the first holding unit and the second holding unit may be coupled together in regard to the optical axis direction such that the guide projection and the position restriction part contacts with each other. When the optical equipment is contracted, the first optical unit and the second optical unit may be moved relatively to one another such that the guide projection and the position restriction part are separated each other in the optical axis direction.

In at least one aspect, when the optical equipment is contracted, the first holding unit and the second holding unit may be moved in a direction of reducing the length of the optical equipment, and the second holding unit contacts a fixed part of the optical equipment.

In at least one aspect, the optical equipment may further comprise a third holding unit that holds a third optical element and is disposed on an image surface side with respect to the second holding unit. In this case, when the optical equipment is contracted, the second holding unit may contact the third holding unit.

In at least one aspect, the optical equipment may further comprise a position adjustment mechanism configured to adjust a position of at least one of the first optical element and the second optical element in the optical axis direction and in a direction perpendicular to the optical axis direction with respect to a corresponding one of the first holding unit and the second holding unit.

According to another aspect of the invention, there is provided optical equipment configured as a lens barrel for a camera, comprising: a fixed frame of the lens barrel; a guide frame supported by the fixed frame; a first cam tube supported by the fixed frame to be rotatable about an optical axis; a moving guide frame movable in an optical axis direction along the guide frame in accordance with rotation of the first cam tube; a second cam tube that is moved integrally with the moving guide frame in the optical axis direction and is rotated together with the first cam tube; a first holding frame that is moved in the optical axis direction by the first cam tube; a second holding frame that is coupled to the first holding frame in regard to the optical axis direction such that the second holding frame is able to move relatively to the first holding frame in the optical axis direction. In this configuration, each of the first holding frame and the second holding frame supports at least one lens.

With this configuration, it becomes possible to enhance optical performance (e.g., variable power characteristics) of the optical equipment while keeping an interval in an optical axis direction between the lenses (e.g., a compensator lens and a relay lens).

In at least one aspect, the optical equipment may further comprise a position adjustment mechanism configured to adjust a position of the at least one lens of at least one of the first holding frame and the second holding frame in the optical axis direction and in a direction perpendicular to the optical axis direction with respect to a corresponding one of the first holding frame and the second holding frame.

According to another aspect of the invention, there is provided optical equipment configured as a lens barrel for a camera, comprising: first, second, third and fourth lenses; a lens driving unit configured to move the first, second and third lenses in an optical axis direction; a first holding frame that holds the second lens; and a second holding frame that holds the fourth lens. In this configuration, the first holding frame and the second holding frame are coupled with each other in regard to the optical axis direction such that the first holding frame and the second holding frame are able to move relatively to each other in the optical axis direction. When the first, second and third lenses are moved by the lens driving unit in the optical axis direction, the second holding frame is moved in the optical axis direction via the first holding frame.

With this configuration, it becomes possible to enhance optical performance (e.g., variable power characteristics) of the optical equipment while keeping an interval in an optical axis direction between the second lens and the fourth lense (e.g., a compensator lens and a relay lens).

In at least one aspect, the first, second, third and fourth lenses may be a focusing lens, a variator lens, a compensator lens and a relay lens, respectively.

In at least one aspect, the optical equipment may further comprise a position adjustment mechanism configured to adjust a position of at least one of the second lens and the fourth lens in the optical axis direction and in a direction perpendicular to the optical axis direction with respect to a corresponding one of the first holding frame and the second holding frame.

In at least one aspect, each of the first to fourth lenses may be formed as a lens group.

### Brief Description of the Accompanying Drawings

Examples of the present invention will now be described with reference to the accompanying drawings, in which:-
Figs. 1A and 1B are perspective views illustrating an outer appearance of a lens barrel according to an embodiment.
Fig. 2 is a cross section of the lens barrel along an optical axis in a capturing state (a wide state).
Fig. 3 is an exploded perspective view of principal components of the lens barrel.
Fig. 4 is a cross section illustrating frames of the lens barrel excepting lens systems.
Each of Figs. 5A and 5B schematically illustrates relationship between lens systems and cam tubes.
Fig. 6A is a cross section along the optical axis, illustrating a state where a first holding frame and a second holding frame are combined, and Fig. 6B is an enlarged view of a circled portion B in Fig. 6A.
Fig. 7A is a side view illustrating a state where the first holding frame and the second holding frame are combined, viewed from an image surface side, Fig. 7B is a cross section cut along a line B1-B1 in Fig. 7A, and Fig. 7C is an enlarged view of a portion C in Fig. 7B.
Each of Figs. 8A, 8B and 8C is a cross section along the optical axis, illustrating extending and contracting motion of the lens systems of the lens barrel.
Fig. 9 is a cross section along the optical axis of the lens barrel in the capturing state (a tele-state).
Fig. 10 is a cross section along the optical axis of the lens barrel in a non-capturing state (a contracted state).
Each of Figs. 11A and 11B is a cross section along the optical axis of the lens barrel, illustrating extending and contracting motion of the first holding frame and the second holding frame.
Each of Figs. 12A and 12B schematically illustrates relationship between a lens system and a cam tube in a lens barrel according to a variation of the embodiment.

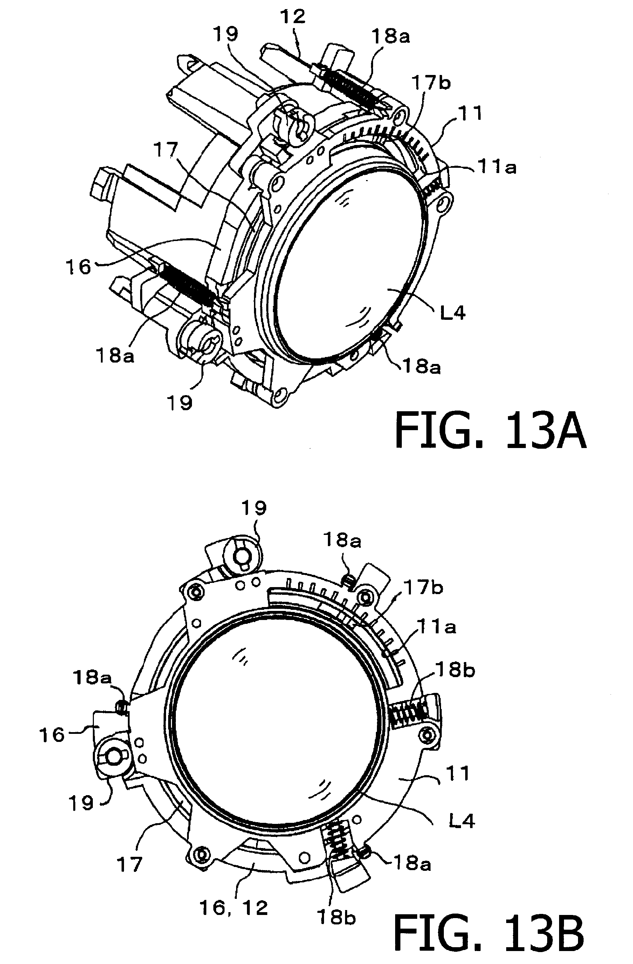

Fig. 13A is a perspective view of a lens frame having a lens position adjustment mechanism, and Fig. 13B is a rear view of the lens frame in Fig. 13A.

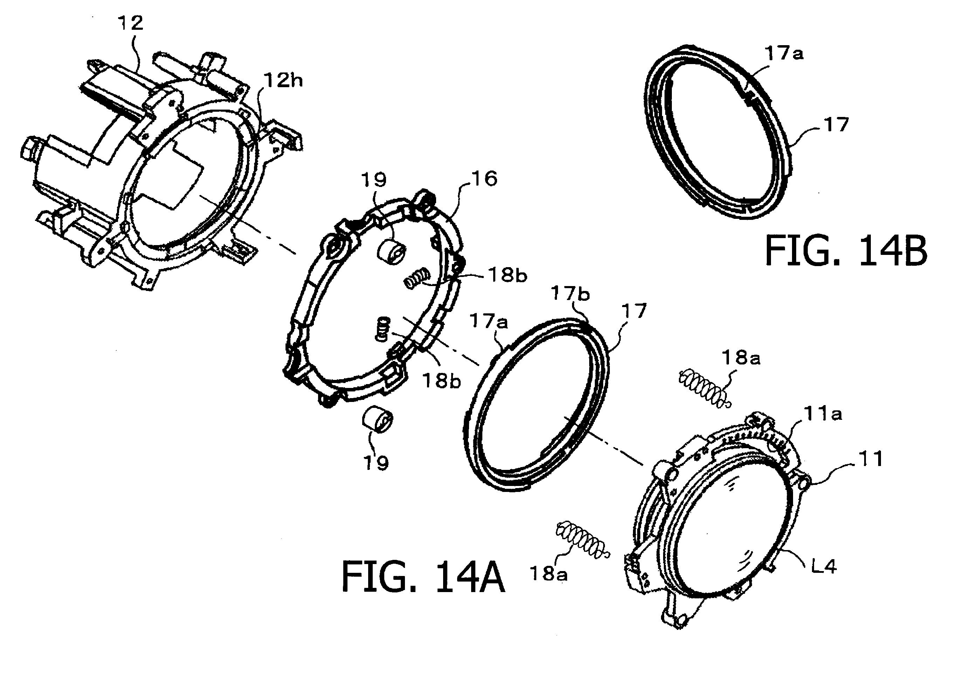

Fig. 14A is an exploded perspective view of the lens frame having the lens position adjustment mechanism, and Fig. 14B is a perspective view of an adjustment ring in Fig.14A.

### Detailed Description of the Embodiments

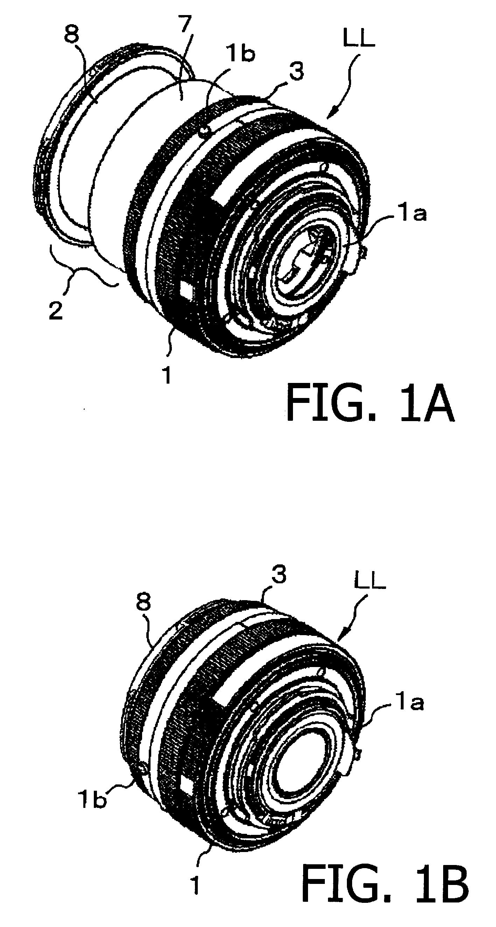

Hereinafter, embodiments according to the invention are described with reference to the accompanying drawings. Figs. 1A and 1B illustrate a lens barrel LL to which optical equipment according to the present invention is applied. Specifically, as an embodiment of the invention, each of Figs. 1A and 1B illustrates a perspective view of an outer appearance of the lens barrel LL used as a zoom lens detachably attachable to a camera body of a digital camera (not shown). The lens barrel LL is configured to include necessary lens systems which are described in detail later. As shown in Fig. 1A, during a photographing operation, a movable frame 2 is extended to project toward a subject side (hereafter, referred to as an object side) in an optical axis direction relative to a fixed frame 1 having a cylindrical shape. As shown in Fig. 1B, in a non-photographing state, the movable frame 2 is retracted to a subject image side (hereafter, referred to as an image surface side) on which an object image is formed by the lens barrel LL so that the movable frame 2 is substantially accommodated in the fixed frame 1 and thereby the lens barrel LL becomes a contacted state. A lock button 1b being a push-button is provided on a part of an outer circumference of the fixed frame 1. The lens barrel LL is configured such that, the lens barrel LL maintains the contracted state when the lock button 1 b is not operated, and can be extended from the contracted state when the lock button 1b is operated.

The lens barrel LL is provided with a variable power ring (a zoom ring) 3 to be operated to rotate about an optical axis along a circumferential surface of the lens barrel LL. By operating the variable power ring 3 to rotate in a rotational direction, as shown in Fig. 1A, the movable frame 2 is moved to project relative to the fixed frame 1 from the state where the movable frame 2 is accommodated in the fixed frame 1, and concurrently lens systems provided in the lens barrel LL are moved to achieve a focal length corresponding to a rotated position of the variable power ring 3. By operating the variable power ring 3 to rotate in an opposite direction to an end position, as shown in 1B, the lens barrel LL is brought to the contracted state where the movable frame 2 is substantially accommodated in the fixed frame 1.

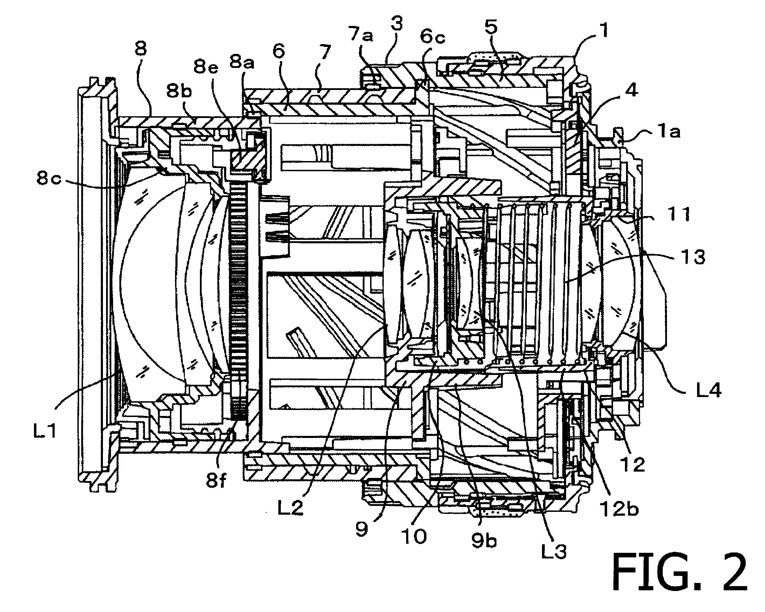

Fig. 2 is a vertical cross section of the lens barrel LL cut along the optical axis, and illustrates the photographing state where the lens barrel LL is extended. In Fig. 2, hatching are added to principal components. The lens barrel LL includes first to fourth lenses L1 to L4. Although each of the first to fourth lenses is formed to be a lens group having a plurality of lenses, each of these lens groups is simply referred to as a lens (i.e., first to forth lenses L1 to L4) for the sake of simplicity. In these lens systems, the first lens L1 is formed as a focusing lens, the second lens L2 is formed as a variator lens, the third lens L3 is formed as a compensator lens, and the fourth lens L4 is formed as a relay lens.

As shown in Fig. 2, in the photographing operation, the lens barrel LL is brought to an extended state where the first, second, third and fourth lenses L1 to L4 are moved to the object side. When the first to fourth lenses L1 to L4 are moved in the optical axis direction to change power through an operation to the variable power ring 3 during the photographing operation, the second lens L2 and the fourth lens L4 are integrally moved while keeping an interval in the optical axis direction between the second lens L2 and the fourth lens L4 (hereafter, frequently referred to as an "optic axial interval") constant. With this configuration, it becomes possible to enhance the variable power characteristics (e.g., achieving stable power change operation) by keeping the optic axial interval of the second lens L2 and the fourth lens L4 constant.

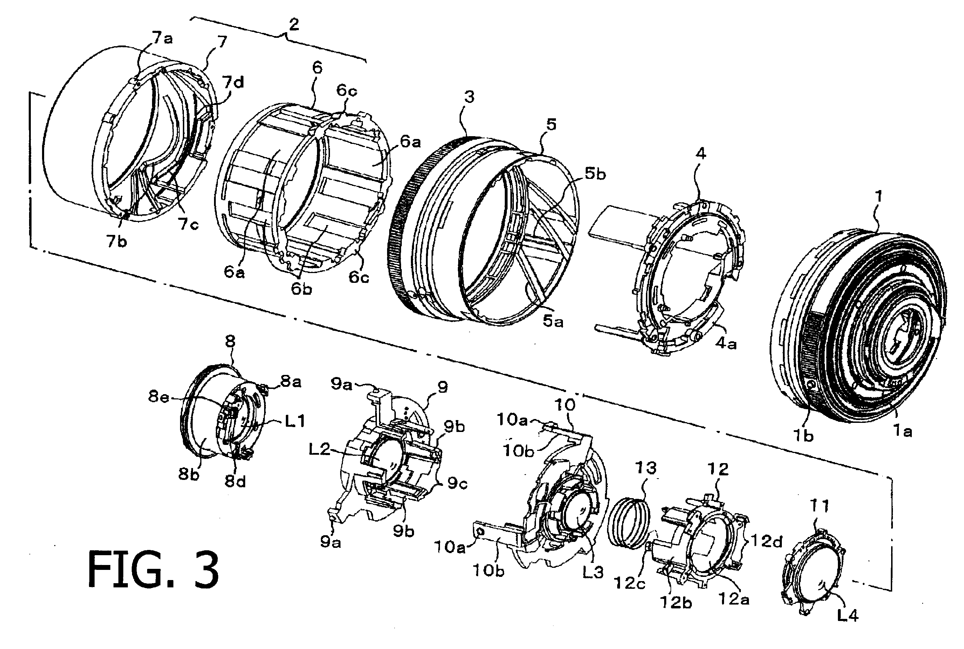

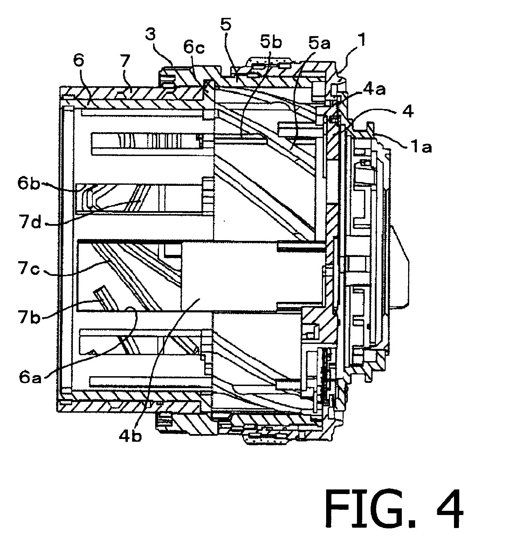

Hereafter, details of the lens barrel LL are explained. Fig. 3 is an exploded perspective view of the lens barrel LL, and Fig. 4 is a cross section illustrating an assembled state of the fixed frame 1, a guide frame 4, a second cam tube 5, a moving guide frame 6 and a first cam tube 7. Referring to Figs. 2 to 4, components of the lens barrel LL excepting the lens systems include the fixed frame 1, the guide frame 4 fixedly supported by the fixed frame 1, the second cam tube 5 rotatably provided about an axis with respect to the fixed frame 1 and the guide frame 4, the moving guide frame 6 movable in the optical axis direction with respect to the guide frame 4, and the first cam tube 7 rotatably provided about the axis with respect to the moving guide frame 6. The moving guide frame 6 and the first cam tube 7 form the second movable frame 2.

A bayonet ring 1a is attached to the image surface side of the fixed frame 1 having a cylindrical shape so as to be attachable to a lens mount of a camera body (not shown). In the inside of the fixed frame 1, the second cam tube 5 is inserted to be along an inner circumferential surface of the fixed frame 1, and the guide frame 4 is inserted on the further inner diameter side.

The second cam tube 5 is supported, to be rotatable about the optical axis, along the inner circumferential surface of the fixed frame 1. In this embodiment, a part of the second cam tube 5 on the object side in the optical axis direction is exposed, and the exposed part of the second cam tube 5 is formed as the variable power ring 3. Therefore, through a rotational operation to the variable power ring 3, the second cam tube 5 is also rotated about the optical axis. Furthermore, on the inner circumferential surface of the second cam tube 5, a helicoid groove 5a and a guide groove 5b extended in the optical axis direction are formed. The helicoid groove 5a is formed to move the moving guide frame 6 in the optical axis direction through helicoidal motion. The guide groove 5b will be described later.

The guide frame 4 has an end part 4a formed in a ring shape on the image surface side in the optical axis direction. The guide frame 4 is supported by the fixed frame 1 at the end part 4. At a plurality of positions along the circumference of the end part 4a, the guide frame 4 is provided with a plurality of guide keys 4b protruding in the optical axis direction. In this embodiment, three guide keys 4b are provided. Each guide key 4b is configured to be coupled to the moving guide frame 6 in a state where each guide key 4b is integrated with the moving guide frame 6 in regard to the circumferential direction so as to movably support the moving guide frame 6 in the optical axis direction without letting the moving guide frame 6 rotate about the optical axis.

The moving guide frame 6 is formed to be a cylindrical shape and is provided with three key grooves 6a at three positions along the circumferential surface thereof. Between intervals of the key grooves 6a, cam windows 6b are formed. Each of the key grooves 6a engages with a corresponding one of the three guide keys 4b of the guide frame 4 such that, through engagement between the key grooves 6a and the guide keys 4b, the moving guide frame 6 is movable in the optical axis direction with respect to the guide frame 4 without rotating about the optical axis. At an end part on the image surface side of the moving guide frame 6, the moving guide frame 6 is provided with helicoid projections 6c protruding outward in the radial direction at a plurality of positions along the circumferential direction.

The helicoids projection 6c is engaged with the helicoids groove 5a on the inner surface of the second cam tube 5, and when the second cam tube 5 is rotated about the optical axis, the moving guide frame 6 is moved in the optical axis direction by helicoidal motion between the helicoid projection 6c and the helicoid groove 5a.

On the outer circumferential surface of the moving guide frame 6, the first cam tube 7 is disposed. The first cam tube 7 is disposed to be integrated with the moving guide frame 6 in regard to the optical axis direction while being supported to be movable relative to the moving guide frame 6 around the optical axis. At an end part on the image surface side of the first cam tube 7, the first cam tube 7 is provided with a plurality of guide projections 7a, and the guide projections 7a are engaged with the respective guide grooves 5b of the second cam tube 5. With this configuration, when the moving guide frame 6 is moved in the optical axis direction by rotating the second cam tube 5, the first cam tube 7 is also moved in the optical axis direction together with the moving guide frame 6, and concurrently the first guide tube 7 is rotated integrally with rotation of the second cam tube 5 about the optical axis relative to the moving guide frame 6. Further, on an inner circumferential surface of the first cam tube 7, three cam grooves including a first cam groove 7b, a second cam groove 7c and a third cam groove 7d are formed. The first, second and third cam grooves 7b, 7c and 7d serve to move the first to third lenses L1 to L3 in the optical axis direction.

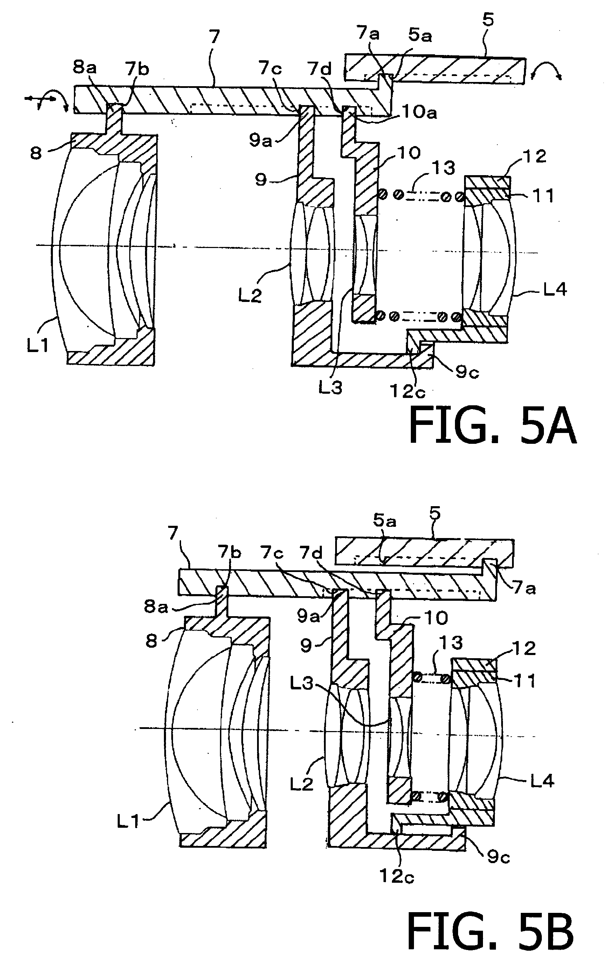

Hereafter, configurations of the above described lens systems (i.e., the first to fourth lenses L1 to L4) will be explained. First, general configurations of the lens systems are explained. Fig. 5A is a schematic diagram generally illustrating arrangement of the first cam tube 7, the second cam tube 5 and the first to fourth lenses L1 to L4. As shown in Figs. 5A and 5B, cam followers 8a, 9a and 10a of the first lens frame 8, the second lens frame 9 and the third lens frame 10 are engaged with the can grooves 7b, 7c and 7d of the first cam tube 7, respectively. With this configuration, when the second cam tube 5 is operated to rotate, the first cam tube 7 is also rotated integrally, and the first to third lens frames 8, 9 and 10 are moved in the optical axis direction with rotation of the first cam tube 7 about the axis. Since the second lens frame 9 is formed as a first holding frame, the second lens frame 9 is frequently referred to as a first holding frame 9 hereafter.

A fourth lens frame 11 is formed integrally with a second holding frame 12, and the second holding frame 12 is movable in the optical axis direction relative to the first holding frame 9. The second holding frame 12 is coupled to the first holding frame 9 in regard to the optical axis direction so that an interval between the second holding frame 12 and the first holding frame 9 does not become larger than a predetermined size in the optical axis direction. A compressed coil spring 13 is provided to intervene between the second holding frame 12 and the third lens frame 10, and the second holding frame 12 is pressed by a spring force of the compressed coil spring 13 in the optical axis direction relative to the first holding frame 9. With this configuration, in a state where no force acts on the compressed coil spring 13 to contract the compressed coil spring 13, the second holding frame 12 is moved integrally with the first holding frame 9 in the optical axis direction.

Hereafter, details about the lens systems are explained. The first lens L1 placed nearest to an object is a focusing lens, and the first lens frame 8 is formed as a first lens unit 8. The first lens unit 8 is configured such that a lens frame 8c holding the first lens L1 is inserted into a unit tube 8b having a cylindrical shape. At an end part of the unit tube 8b on the image surface side, three cam followers 8a are provided to protrude outward in the radial direction at three positions along the circumferential direction. The cam follower 8a are engaged respectively with the first cam grooves 7b of the first cam tube 7. With this configuration, the first lens unit 8 is moved in the optical axis direction in accordance with rotation of the first cam tube 7, and the first lens L1 is moved in the optical axis direction integrally with the first lens unit 8. Furthermore, when the moving guide frame 6 is moved in the optical axis direction and thereby the first cam tube 7 is moved in the optical axis direction, the first lens unit 8 is also moved in the optical axis direction.

In the first lens unit 8, the lens frame 8c is provided to be movable in the optical axis direction relative to the unit tube 8b. Specifically, the lens frame 8c is screwed into the unit tube 8b, and a focusing motor 8d is disposed in the unit tube 8b. Furthermore, a gear 8e rotated by the focusing motor 8d is disposed to engage with a ring gear 8f provided on the lens frame 8c. With this configuration, when the focusing motor 8d is driven, the lens frame 8c is moved in a screwing manner in the optical axis direction so that the position of the first lens L 1 in the optical axis direction can be adjusted relative to the unit tube 8b and thereby the focusing adjustment is achieved.

The second lens L2 is a variator lens, and is held on the second lens frame 9 (i.e., the first holding frame 9). The first holding frame 9 is formed by cutting out two portions from a circular plate member, and, at three positions along the circumference, the cam followers 9a are formed to protrude outward in the radial direction. The cam followers 9a engage with the second cam groove 7c of the first cam tube 7. With this configuration, when the first cam tube 7 is rotated about the axis, the first holding frame 9 is moved in the optical axis direction, and the second lens L2 held on the first holding frame 9 is also moved in the optical axis direction. Furthermore, when the moving guide frame 6 is moved in the optical axis direction and thereby the first cam tube 7 is moved integrally in the optical axis direction, the first holding frame 9 and the second lens L2 are also moved in the optical axis direction.

The first holding frame 9 is provided with a plurality of guide pieces 9b at a plurality of positions along the circumferential direction. The guide pieces 9b are formed to protrude in the optical axis direction such that the inner diameter slightly decreases toward the image surface side. At an end part of each guide piece 9b on the image surface side, a guide projection 9c is formed to protrude inward in the radial direction. As described later, the guide projection 9c serves to restrict the relative position (i.e., the position in the optical axis direction) of the first holding frame 9 with respect to the second holding frame 12 integrally formed with the fourth lens frame 11. Furthermore, at two positions along the circumferential direction of the first holding frame 9, pressing members engaging with the second holding frame 12 are provided. The pressing members are explained later.

The third lens L3 is a compensator lens, and is held on the third lens frame 10. The third lens frame 10 is disposed in an inner region of the first holding frame 9 surrounded by the plurality of guide pieces 9b, and is provided to be movable in the optical axis direction relative to the first holding frame 9 in a state where the peripheral part of the third lens frame 10 is supported by the guide pieces 9b. At three positions along the circumferential direction of the third lens frame 10, arm pieces 10b each of which is formed to protrude toward the object side are provided. At an end of each arm piece 10b on the object side, a cam follower 10a is formed to protrude outward in the radial direction. The cam follower 10a is engaged with the third cam groove 7d of the first cam tube 7. With this configuration, the third lens frame 10 is moved in the optical axis direction in accordance with rotation of the first cam tube 7, and the third lens L3 is moved integrally in the optical axis direction. Furthermore, when the moving guide frame 6 is moved in the optical axis direction and the first cam tube 7 is integrally moved in the optical axis direction, the third lens L3 is also moved in the optical axis direction.

The fourth lens L4 is a relay lens, and is held on the fourth lens frame 11. The fourth lens frame 11 is integrally supported by the second holding frame 12. The second holding frame 12 has a circular opening 12a at a central region including the optical axis, and the fourth lens frame 11 is fitted into the opening 12a so that the fourth lens frame 11 is integrated with the second holding frame 12. At a plurality of positions along the circumference of the second holding frame 12, a plurality of position restriction pieces 12b respectively corresponding to the plurality of guide pieces 9b of the first holding frame 9 are provided to protrude toward the object side in the optical axis direction. The position restriction piece 12b is formed such that the outer diameter becomes larger toward the object side.

In this configuration, at an end of each position restriction piece 12b on the object side, a position restriction part 12c is formed to protrude outward in the radial direction. Two of the plurality of position restriction pieces 12b disposed on one side with respect to a virtual diameter line passing through the center of the second holding frame 12 are formed as displaced contacting parts which are described later. Further, at a plurality of positions along the outer circumferential surface of the second holding frame 12, retracted position restriction parts 12d are formed to protrude outward in the radial direction.

As shown in Fig. 2, the first holding frame 9 and the second holding frame 12 are disposed such that, in a state where the third lens frame 10 is inserted in the inner portion of the first holding frame 9, the optical axis position restriction pieces 12b of the second holding frame 12 overlap, in the radial direction, with the corresponding guide pieces 9b of the first holding frame 9, on the inner side of the guide pieces 9b. Between the third lens frame 10 and the second holding frame 12 combined with the first holding frame 9, the compressed coil spring 13 is disposed. The object side end of the compressed coil spring 13 contacts the image surface side of the third lens frame 10, and the image side end of the compressed coil spring 13 contacts the object side surface of the second holding frame 12. With this configuration, the third lens frame 10 and the second holding frame 12 are pressed to separate from one another in the optical axis direction by a pressing force in the axial direction of the compressed coil spring 13.

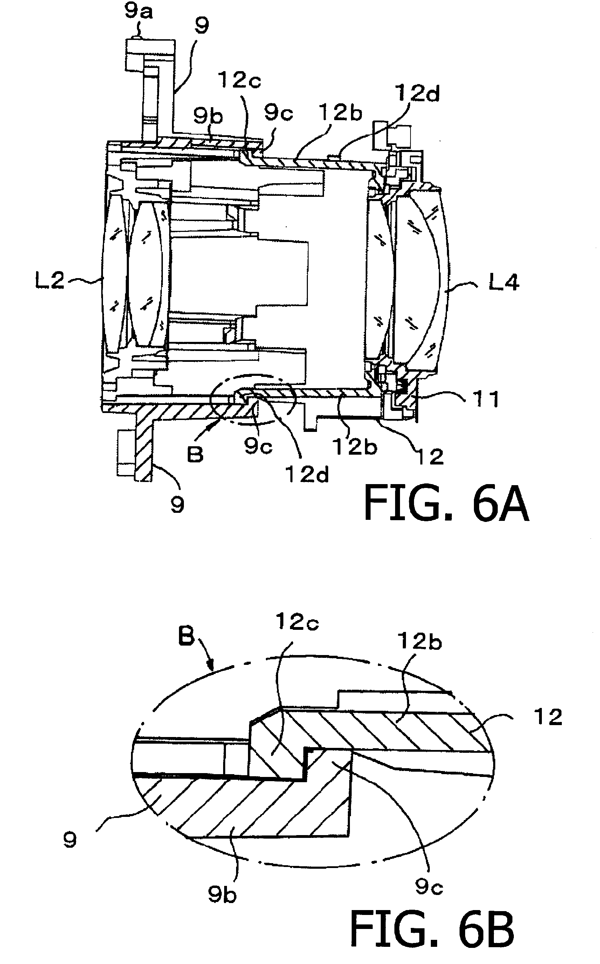

A combined structure of the first holding frame 9 and the second holding frame 12 will now be explained in detail. Fig. 6A is a cross sectional view cut along the optical axis, illustrating the combined state of the first holding frame 9 and the second holding frame 12. Fig. 6B is an enlarged view of a portion B in Fig. 6A. As described above, the position restriction piece 12b of the second holding frame 12 overlaps, in the radial direction, with the guide piece 9b of the first holding frame 9, on the inner side of the guide piece 9b. With this configuration, the outer circumferential surface of the position restriction piece 12b of the second holding frame 12 contacts the inner side end of the guide projection 9c of the guide piece 9b of the first holding frame 9. Through this contact, the second holding frame 12 is supported at the outer circumferential surface of the position restriction piece 12b in a state where the optical axis of the second holding frame 12 coincides with the optical axis of the first holding frame 9.

In this situation, the second holding frame 12 is supported such that the second holding frame 12 is able to move in the optical axis direction relative to the first holding frame 9. Further, in this combined state, the guide projection 9c formed on the guide piece 9b of the first holding frame 9 to protrude inward in the radial direction and the position restriction part 12c formed on the position restriction piece 12b of the second frame 12 to protrude outward in the radial direction are disposed to face with each other in the optical axis direction. Therefore, when the holding frames 9 and 12 are moved to become away from one another in the optical axis direction, the guide projection 9c and the position restriction piece 12b contact with each other, thereby restricting the optical axis interval between the holding frames 9 and 12 to the maximum optical axis interval.

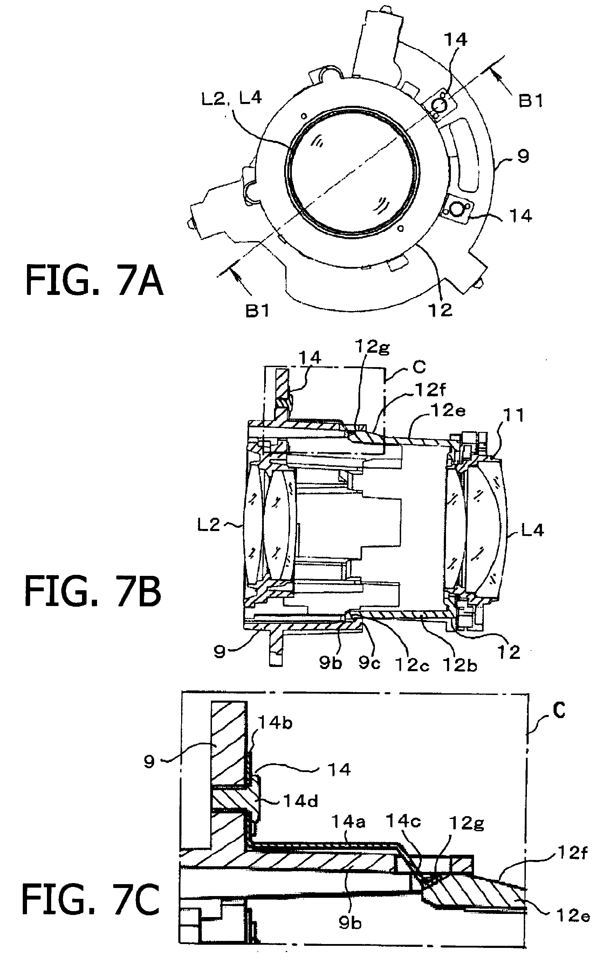

Fig. 7A is a side view illustrating the combined state of the first holding frame 9 and the second holding frame 12 viewed from the image surface side. Fig. 7B is a cross sectional view along the line B1-B1 in Fig. 7A. Fig. 7C is an enlarged view of a portion C in Fig. 7B. As shown in Figs. 7B and 7C, two of the plurality of position restriction pieces 12b provided on the second holding frame 12 (i.e., two position restriction pieces 12b disposed on one side with respect to a virtual line passing through the optical axis) are formed as displaced contacting parts 12e. Each displaced contacting part 12e is formed such that the thickness thereof becomes larger at a point closer to the object side. An outer surface of the displaced contacting part 12e is formed to be a sloped surface 12f. Furthermore, an outer surface of an end of the displaced contacting part 12e on the object side of the slope surface 12f is formed as a reversed tapered surface 12g having the thickness which becomes smaller at a point closer to the tip side. In this configuration, a pressing member 14 provided on the first holding frame 9 elastically contacts the tapered surface 12g.

The pressing members 14 are provided at positions which are along the circumferential direction of the first holding frame 9 and respectively correspond to the two displaced contacting parts 12e of the second holding frame 12. Each of the two pressing members 14 is formed of a spring piece 14a formed by bending a strip-like leaf spring member, and an object side proximal part 14b thereof is fixed to the image side surface of the first holding frame 9 by a screw 14d. An image side tip part 14c of the spring piece 14a is bent in a shape of a wedge, and the spring piece 14a is disposed such that an inner surface of the tip part 14c contacts the tapered surface 12g of the displaced contacting part 12e from the outer diameter side toward the inner diameter side. With this configuration, through an elastic force of the spring piece 14a, the tip part 14c of the spring piece 14a elastically contacts the tapered surface 12g toward the inner diameter side. As a result, the two displaced contacting parts 12e are pressed toward the inner diameter side by the pressing members 14, and, through this pressing force of the pressing member 14, the entire second holding frame 12 is applied a displacing force toward one direction along the radial direction which is perpendicular to the optical axis direction.

The extending and contracting operation of the lens barrel LL configured as described above will now be explained. As shown in Fig. 2, in a short focus length state (a wide state) during the photographing operation, the variable power ring 3 is rotated in one rotational direction, and, in this case, the second cam tube 5 is integrally rotated in the same rotational direction. Therefore, through the helicoidal motion between the helicoids groove 5a of the second cam tube 5 and the helicoid projection 6c of the moving guide frame 6 engaging with the helicoids groove 5a, the moving guide frame 6 is moved toward the object side in the optical axis direction. Concurrently, the first cam tube 7 integrally formed with the moving guide frame 6 in regard to the optical axis direction is also moved toward the object side in the optical axis direction. At this time, due to key coupling with the guide frame 4, the moving guide frame 6 is not rotated about the optical axis; however, the first cam tube 7 is rotated integrally with the second cam tube 5 about the optical axis. Fig. 5A schematically shows this state.

When the first cam tube 7 is rotated about the optical axis, through cam motion by engagement between the first cam groove 7b of the first cam tube 7 and the cam follower 8a of the first lens unit 8, the first lens unit 8 is moved toward the object side in the optical axis direction. Through such movement of the first cam tube 7 in the optical axis direction and movement of the first lens unit 8 in the optical axis direction, the length of the entire lens barrel LL becomes an extended state.

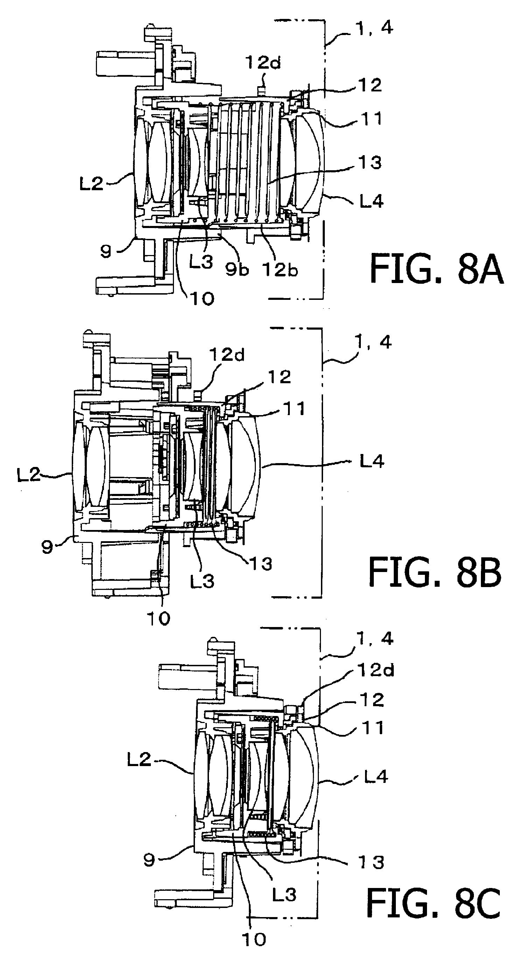

Concurrently, through cam motion between the second cam groove 7c of the first cam tube 7 and the cam follower 9a of the first holding frame 9, the first holding frame 9 is also moved toward the object side in the optical axis direction. Fig. 8A schematically shows this state. When the first holding frame 9 is moved toward the object side in the optical axis direction, the first holding frame 9 is brought to the state of being positioned away from the second holding frame 12, and when the first holding frame 9 is separated from the second holding frame 12 by a predetermined axial distance, the guide projection 9c of the first holding frame 9 contacts the outer circumferential surface of the second holding frame 12. As a result, the second holding frame 12 is positioned in regard to a direction perpendicular to the optical axis direction by the guide projection 9c, and thereby the first holding frame 9 and the second holding frame 12 are brought to the state where the optical axes thereof coincide with each other.

As the first holding frame 9 is further moved toward the object side in the optical axis direction and the interval between the first holding frame 9 and the second holding frame 12 gets larger, the guide projection 9c of the first holding frame 9 and the position restriction part 12c of the second holding frame 12 contact with each other in regard to the optical axis direction, as a result, the first holding frame 9 and the second holding frame 12 are coupled in regard to movement in the optical axis direction, and thereby the second holding frame 12 is moved toward the object side integrally in accordance with movement of the first holding frame 9 in the optical axis direction.

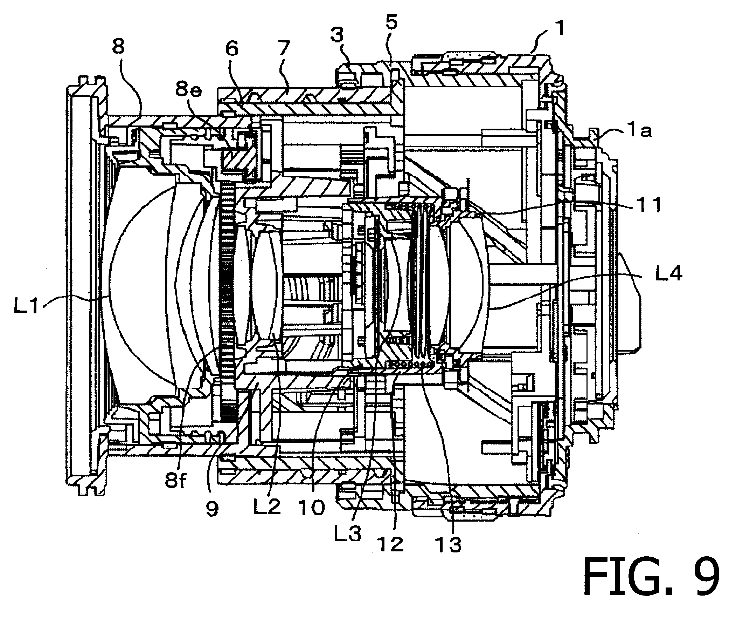

When the variable power ring 3 is rotated within a required rotational angle range in one rotational direction or a reversed rotational direction, the first cam tube 7 is rotated accordingly, and, due to engagement of the third cam groove 7d of the first cam tube 7 and the cam follower 10a of the third lens frame 10, the third lens frame 10 is moved toward the object side or the image side in the optical axis direction. As a result, as shown in Fig. 9, when the third lens frame 10 bends the compressed coil spring 13 and is moved to the object surface side, the lens barrel LL becomes the long focal length state (a tele-state). Fig. 8B schematically illustrates the second to fourth lenses L2 to L4 in this state.

During the photographing operation in the wide state or the tele-state, in the first lens unit 8, the focus adjustment is performed by moving the lens frame 8c in a screwing motion in the optical axis direction while driving the focusing motor 8d in the unit tube 8b, and thereby adjusting the position of the first lens L1 in the optical axis direction with respect to the unit tube 8b. Since a general focus adjustment manner can be used in this embodiment, detailed explanation about the focus adjustment will be omitted.

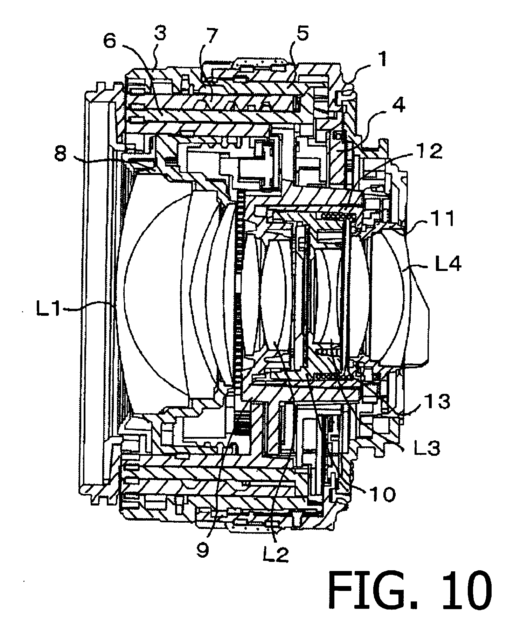

Fig. 10 is a cross sectional view of the lens barrel LL in the contracted state during the non-photographing operation. When the variable power ring 3 is rotated to a rotational position closer to an end edge on an opposite side with respect to the above described one direction, through the helicoidal motion between the helicoid groove 5a of the second cam tube 5 integrally rotated with the variable power ring 3 and the helicoid projection 6a of the moving guide frame 6 engaging with the helicoid groove 5a, the moving guide frame 6 is moved toward the image surface side in the optical axis direction. Concurrently, the first cam tube 7 integrally disposed with the moving guide frame 6 in the optical axis direction is also moved toward the image surface side in the optical axis direction. As a result, the moving guide frame 6 and the first cam tube 7 are accommodated in the inner diameter portion of the fixed frame 1 and the second cam tube 5.

Since, at this time, the first cam tube 7 is rotated about the optical axis integrally with the second cam tube 5 as the first cam tube 7 is moved in the optical axis direction, the first lens unit 8 is moved toward the image surface side by the first cam groove 7b and is accommodated in the inner diameter portion of the first cam tube 7. Concurrently, the first holding frame 9 is moved toward the image surface side by the second cam groove 7c. Further, the third lens frame 10 is moved toward the image surface side by the third cam groove 7d. By such movement of the third lens frame 10 toward the image surface side, the compressed coil spring 13 is contracted, and thereby the moving force of the third lens frame 10 is transmitted to the second holding frame 12 via the compressed coil spring 13, and the second holding frame 12 is moved toward the image surface side.

The second holding frame 12 is moved toward the image surface side to reach the inner diameter position of the guide frame 4 and the fixed frame 1, and movement of the second holding frame 12 is restricted in a state where the retracted position restriction part 12d provided on the second holding frame 12 contacts the object side surface of the guide frame 4. By such restriction, the second holding frame 12 (i.e., the fourth lens L4) is accommodated in the inner diameter portion of the fixed frame 1. Further, the second holding frame 12 is pressed toward the guide frame 4 by a spring force of the compressed coil spring 13 intervening between the second holding frame 12 and the guide frame 4, and thus the moving position of the second holding frame 12 is restricted. Fig. 8C schematically illustrates the second to fourth lenses L2 to L4 in this state.

Thus, the first lens unit 8, the first holding frame 9, the third lens frame 10 and the second holding frame 12 are respectively moved toward the image surface side, and the lens barrel LL is set to the contracted state as shown in Fig. 10. With this configuration, the tube length (i.e., the size in the optical axis direction) of the lens barrel LL in the non-photographing state can be reduced, and thereby portability of the lens barrel can be enhanced. Fig. 5B is a schematic view of the lens barrel in this state.

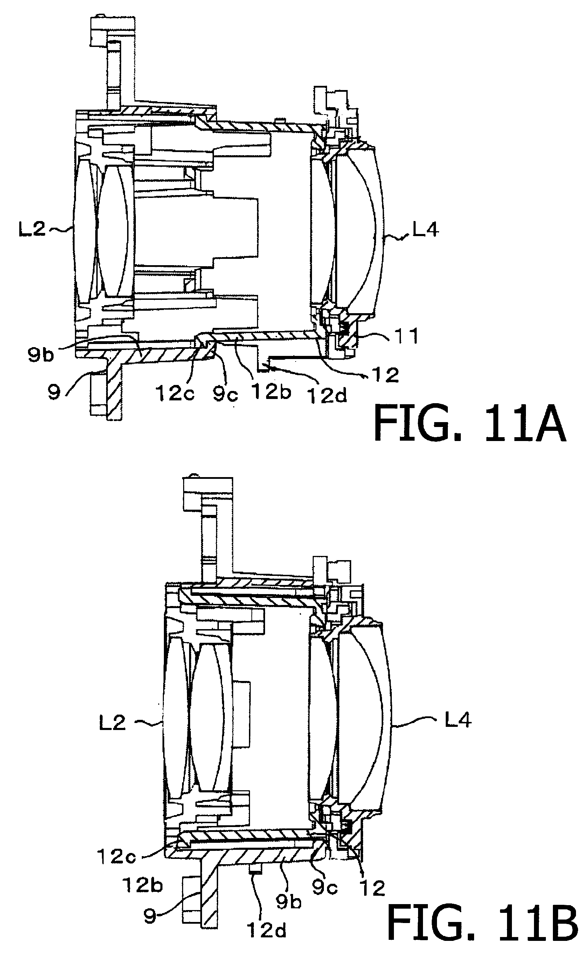

Regarding mutual motion of the first holding frame 9 and the second holding frame 12, during the photographing operation of the lens barrel LL, the guide projection 9c of the first holding frame 9 and the position restriction part 12c of the second holding frame 12 contact with each other in regard to the optical axis direction as shown in Fig. 11A where only the first holding frame 9 and the second holding frame 12 are illustrated for the sake of simplicity. Thus, the first holding frame 9 and the second holding frame 12 are coupled together at the optical axis interval defined when the guide projection 9c of the first holding frame 9 and the position restriction part 12c of the second holding frame 12 contact with each other. In particular, since the second holding frame 12 is pressed toward the image surface side by the compressed coil spring 13 intervening between the second holding frame 12 and the third lens frame 10, the guide projection 9c and the position restriction part 12c elastically contact with each other by the spring force of the compressed coil spring 13 and thereby the contacting state of the first holding frame 9 and the second holding frame 12 (i.e., the optical axis interval between the first holding frame 9 and the second holding frame 12) is kept constant. Furthermore, since the tip part 14c of the pressing member 14 of the first holding frame 9 elastically contacts the tapered surface 12g of the displaced contacting part 12e of the second holding frame 12, a component of force in the axial direction of the elastic contacting force acting on the tapered surface 12g supports the elastic contact between the guide projection 9c and the position restriction part 12c.

Therefore, in the lens barrel LL, during the photographing operation, the second holding frame 12 is moved in the optical axis direction while keeping the optical axis interval between the second holding frame 12 and the first holding frame 9 constant, and the focal length is adjusted from the tele-state to the wide state through movement of the third lens frame 10 in the optical axis direction. That is, the first holding frame 9 and the second holding frame 12 are moved in the optical axis direction in the state where the first holding frame 9 and the second holding frame 12 are coupled in regard to the optical axis direction, and thereby the variable power characteristics can be enhanced.

As shown in Fig. 11B, when the lens barrel LL is contracted, the first holding frame 9 is moved toward the image surface side by the second cam groove 7c, and at this state the optical axis interval between the first holding frame 9 and the second holding frame 12 is maintained through the effect of the guide projection 9c, the position restriction part 12, the compressed coil spring 13 and the pressing member 14. Accordingly, the second holding frame 12 is moved toward the image surface side together with the first holding frame 9. When the retracted position restriction part 12d of the second holding frame 12 contacts the guide frame 4 and further movement of the second holding frame 12 toward the image surface side is restricted, the guide projection 9c of the first holding frame 9 and the position restriction part 12c of the second holding frame 12 separate with respect to each other. Therefore, the first holding frame 9 is continuously moved toward the image surface side regardless of the fact that the movement of the second holding frame 12 toward the image surface side is restricted. Further, when the tip of the guide projection 9c contacts the object side surface of the guide frame 4 and the lens barrel LL becomes the contracted state, further movement of the first holding frame 9 is restricted.

When the lens barrel LL is contracted, the inner edge of the guide projection 9c gradually and slightly separates in the radial direction from the outer circumferential surface of the position restriction piece 12c as the optical axis interval between the first holding frame 9 and the second holding frame becomes smaller because each of the guide piece 9b and the position restriction piece 12c is formed such that the inner diameter becomes larger at a point closer to the object side. As a result, the position restriction piece 12c (i.e., the second holding frame 12) has a degree of freedom in the radial direction. Accordingly, when the second holding frame 12 and the first holding frame 9 contact the guide frame 4 and thereby movement thereof is restricted, the guide piece 9c and the position restriction piece 12c are prevented from interfering with each other, and thereby smooth contracting motion of the lens barrel LL can be achieved.

Furthermore, since the tip part 14c of the spring piece 14a of the pressing member 14 elastically contacts the tapered surface 12g of the displaced contacting part 12e, the displaced contacting part 12e (i.e., the second holding frame 12 ) is pressed in a direction perpendicular to the optical axis by the pressing member 14. Therefore, even when a gap exists between the second holding frame 12 and the first holding frame 9 in the radial direction, the second holding frame 12 is displaced in the radial direction by the pressing force from the pressing member 14 in the direction perpendicular to the optical axis, and thereby the second holding frame 12 closely contacts the first holding frame 9 on the opposite side of the region where the pressing member 14 is disposed. As a result, such a gap between the first holding frame 9 and the second holding frame 12 can be absorbed. Accordingly, during the photographing operation, it is possible to maintain the positions of the first holding frame 9 and the second holding frame 12 in the optical axis direction (i.e., it is possible to maintain the state where the optical axes of the second lens L2 and the fourth lens L4 coincide with each other).

In the lens barrel LL according to the embodiment, the slope surface 12f is formed on the displaced contacting part 12e. Therefore, when the first holding frame 9 and the second holding frame 12 move relative to each other in the optical axis direction, the tip part 14c of the spring piece 14a of the pressing member 14 contacts and slides on the slope surface 12f. As a result, rapid change of the pressing force (the elastic contacting force) can be prevented when the pressing member 14 contacts or separates from the tapered surface 12g. Further, occurrence of impact on the lens barrel LL during the contracting motion or extending motion of the lens barrel LL can be prevented.

### Variations

In the following, variations of the lens barrel LL are described. The following explanation focuses on features of modified configurations of the lens barrel LL.

In the above described embodiment, the second holding frame 12 is pressed in the direction perpendicular to the optical axis to absorb the gap in the radial direction by causing the pressing member 14 to contact the displaced contacting part 12e of the second holding frame 12. However, the displaced contacting part 12e may be formed to have an elastic property in regard to the radial direction such that the displaced contacting part 12e contacts the guide piece 9b of the first holding frame 9 in the radial direction. In this case, the second holding frame 12 is pressed in the direction perpendicular to the optical axis due to the elastic property of the displaced contacting part 12. As a result, the pressing member can be omitted.

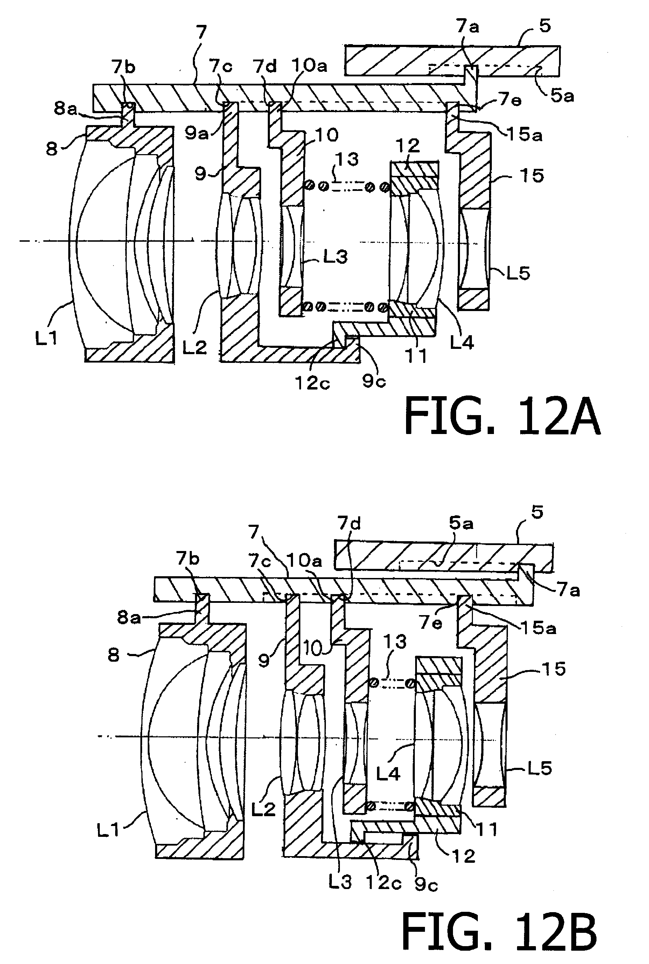

In the lens barrel, position restriction of the second holding frame 12 toward the image surface side may be achieved by a part of a lens system. Fig. 12A schematically illustrates such a configuration. In this example, the lens barrel is provided with a fifth lens L5 on the image surface side of the fourth lens L4. Specifically, a fifth lens frame 15 of the fifth lens L5 has a cam follower 15a, and the cam follower 15a engages with a fourth cam groove 7e formed on the first cam tube 7. In this example, the fifth lens L5 moves only by a slight moving amount in the optical axis direction in accordance with rotation of the first cam tube 7.

The fifth lens frame 15 is formed as a third holding frame. The third holding frame stays substantially at the same position in the optical axis direction on the image surface side of the fourth lens L4. Therefore, when the lens barrel is contracted, as shown in Fig. 12B, the second holding frame 12 (a fourth lens frame in this example) contacts the third holding frame 15. With this configuration, it becomes possible to restrict the position of the second holding frame 12 and the first holding frame 9 in the optical axis direction during the contracting motion of the lens barrel, and thereby the suitable contracting motion of the lens barrel can be achieved.

The lens barrel may be provided with a mechanism enabling adjustment of lens positions of the lenses held on the first to third lens frames both in the optical axis direction and the direction perpendicular to the optical axis. In this example, a lens position adjustment mechanism for the fourth lens L4 held on the second holding frame 12 is explained. Fig. 13A is a perspective view illustrating the lens position adjustment mechanism, and Fig. 13B illustrates the lens position adjustment mechanism viewed from the image surface side along the optical axis. Fig. 14A is an exploded perspective view of the lens position adjustment mechanism.

In Figs. 13A and 13B, the fourth lens L4 is held on the second holding frame 12 via the fourth lens frame 11, and the fourth lens frame 11 is configured to be able to move in the optical axis direction and the direction perpendicular to the optical axis relative to the second holding frame 12. Specifically, as shown in Fig. 14A, at the image surface side edge of the second holding frame 12, a ring-shaped fixed ring 16 is supported integrally with the second holding frame 12. On an inner diameter side of the fixed ring 16, a ring-shaped adjustment ring 17 is inserted and supported to be able to rotate about the optical axis. Further, the fourth lens frame 11 is held by the fixed ring 16 and the second holding frame 12 while sandwiching the adjustment ring 17 between the second holding frame 12 and the fourth lens frame 11 in the state where the fourth lens frame 11 contacts the image side surface of the adjustment ring 17.

At three equally divided positions along the circumferential direction of the fourth lens frame 14, tension coil springs 18a each having an elastic force in the optical axis direction are disposed. Each of the tension coil springs 18a is provided such that an end of the coil spring 18a is hooked to the second holding frame 12 and the other end of the coil spring 18a is hooked to the fourth lens frame 11. With this configuration, the fourth lens frame 11 elastically contacts the adjustment ring 17 by a drawing force of the three tension coil springs 18a, and is held on the second holding frame 12 by this drawing force.

At two positions along the circumferential direction of the fourth lens frame 11 (namely, at two positions on one side of a virtual diameter line), compressed coil springs 18b each having an elastic force in the radial direction are disposed to intervene between the fixed ring 16 and the fourth lens frame 11. Therefore, the fourth lens frame 11 is pressed, by the compressed coil springs 18b, toward one radial direction in a plane perpendicular to the optical axis with respect to the fixed ring 16 (i.e., the second holding frame 12).

At two positions in the circumferential direction opposite to the above described one side with respect to the virtual diameter line of the fourth lens frame 11, adjustment cams 19 disposed on and supported by the fixed ring 16 are provided to contact the fourth lens frame 11. The adjustment cam 19 is formed to be a circular eccentric cam, and is disposed such that a circumferential surface of the adjustment cam 19 (i.e., a cam surface) contacts a circumferential edge of the fourth lens frame 11 in the radial direction. Each of the adjustment cams 19 is formed to have a slit on one surface thereof facing in the optical axis direction, and can be rotated through a rotation operation thereto via the slit using a jig. By this rotation operation, the fourth lens frame 11 contacting a cam surface of the adjustment cam 19 can be pressed in the radial direction.

Fig. 14B is a perspective view of the adjustment ring 17 viewed from the object side. As shown in Fig. 14B, the adjustment ring 17 is integrally formed with a contacting projection 17a on the object side surface in the optical axis direction. The contacting projection 17a contacts, in the optical axis direction, a tapered end surface 12h formed on the image side end part of the second holding frame 12. The tapered end surface 12h is formed to be inclined along the circumferential direction, and is displaced in the optical axis direction by the positional difference of the tapered end surface 12h along the circumferential direction. Further, the adjustment ring 17 is provided with an operation projection 17b at a part of the image side surface thereof, and is exposed to the image surface side through an arc-shaped window part 11a formed in the fourth lens frame 11. By operating the operation projection 17b in the circumferential direction through the window part 11a, the position of the adjustment ring 17 in the rotational direction about the optical axis can be adjusted.

According to the above described lens position adjustment mechanism, by operating the adjustment cam 19 to rotate, the adjustment cam 19 presses, in the radial direction, the periphery of the fourth lens frame 11 contacting the cam surface of the adjustment cam 19. As a result, the fourth lens frame 11 is moved in the radial direction while bending the compressed coil springs 18b. Therefore, by appropriately rotating the two adjustment cams 19, the fourth lens frame 11 can be moved in a plane perpendicular to the optical axis. As a result, it becomes possible to cause the center of the fourth lens frame 11 (i.e., the optical axis of the fourth lens L4) to coincide the optical axis of the lens barrel LL.

When the position of the adjustment ring 17 is adjusted by operating the operation projection 17b around the optical axis, the contacting projection 17a of the adjustment ring 17 is moved along the tapered end surface 12h while contacting the tapered end surface 12h of the second holding frame 12. Therefore, the position of the contacting projection 17b in the optical axis direction is changed by the tapered end surface 12h. Accordingly, the fourth lens frame 14 which is caused to elastically contact the image side surface of the adjustment ring 17 by the tension coil springs 18a is also moved in the optical axis direction integrally with the adjustment ring 17. As a result, the position of the fourth lens frame 11 (i.e., the position of the fourth lens L4 in the optical axis direction) can be adjusted. Therefore, even when a position shift in the optical axis direction and/or in the direction perpendicular to the optical axis is caused between the first holding frame 9 and the second holding frame 12, the lens barrel having a high degree of quality can be provided by adjusting the position of the fourth lens L4.

It is understood that the above described lens position adjustment mechanism can be applied not only to the fourth lens L4 but also to the other lens systems.

In the above described embodiment, each of the first to fifth lenses may be configured as a lens group.

In the above described embodiment, the disclosed feature is applied to the lens barrel; however, in another embodiment, the disclosed feature may be applied to other optical devices. That is, an optical element used in the optical device to which the disclosed feature is applied is not limited to a lens or a lens group, but may be various types optical elements, such as, an aperture stop, a shutter, a filter or an image pickup device (e.g., a CMOS device).

The disclosed feature may be applied to a monocle, binoculars, a telescope, a camera module or a lens module for various types of mobile devices, in addition to a lens barrel for a lens interchangeable camera, a lens barrel for a compact camera, a lens barrel for a camcorder.

The foregoing is the explanation about the embodiment of the invention. The invention is not limited to the above described embodiment, but can be varied in various ways within the scope of the invention. For example, the invention includes a combination of embodiments explicitly described in this specification and embodiments easily realized from the above described embodiment.

## Claims

1. Optical equipment comprising:-
a first holding unit (9) for holding a first optical element (L2); and
a second holding unit (12) for holding a second optical element (L4);
wherein the first holding unit and the second holding unit are provided to be movable in an optical axis direction so as to allow the optical equipment to reduce a length in the optical axis direction;
wherein the first holding unit is configured to be driven by a driving unit in the optical axis direction; and
wherein the second holding unit is coupled to the first holding unit in regard to the optical axis direction such that the second holding unit is allowed to move integrally with the first holding unit and is allowed to move relatively to the first holding unit.

2. Optical equipment according to claim 1 wherein at least one of the first holding unit and the second holding unit has a position restriction mechanism formed to restrict relative movement of the first holding unit and the second holding unit in a direction of moving away from each other in regard to the optical axis direction.

3. Optical equipment according to claim 2
wherein the first holding unit has a plurality of guide pieces (9b) arranged along a circumferential direction of the first holding unit, each of the plurality of guide pieces being formed to project in the optical axis direction;
wherein the second holding unit has a plurality of position restriction pieces (12b) arranged along a circumferential direction of the second holding unit, each of the plurality of position restriction pieces being formed to project in the optical axis direction; and
wherein the second holding unit is held by the plurality of guide pieces of the first holding unit at the plurality of position restriction pieces.

4. Optical equipment according to claim 3
wherein each of the plurality of guide pieces has a guide projection (12c) formed at a tip of the each of the plurality of guide pieces;
wherein each of the plurality of position restriction pieces has a position restriction part (9c) formed at a tip of the each of the plurality of position restriction pieces to contact the guide projection of a corresponding one of the plurality of guide pieces in the optical axis direction; and
wherein the guide projection and the position restriction part constitute the position restriction mechanism.

5. Optical equipment according to claim 4
wherein the second holding unit is held on the first holding unit in a state where an outer circumferential surface of each of the plurality of position restriction pieces contacts, in a radial direction, an inner diameter end of the guide projection of a corresponding one of the plurality of guide pieces when the guide projection contacts the position restriction part in the optical axis direction.

6. Optical equipment according to claim 4 or 5
wherein, in a state where the guide projection is separated from the position restriction part in the optical axis direction, an outer circumferential surface of each of the plurality of position restriction pieces is separated, in a radial direction, from an inner diameter end of the guide projection of a corresponding one of the plurality of guide pieces.

7. Optical equipment according to any of claims 4 to 6 further comprising a spring member (13) disposed to cause the second holding unit to be separated from the first holding unit in the optical axis direction;
wherein the guide projection and the position restriction part contact with each other in the optical axis direction by a pressing force of the spring member.

8. Optical equipment according to any preceding claim
wherein the first holding unit has a pressing member (14) disposed to elastically contact the second holding unit and to press the second holding unit toward a direction perpendicular to the optical axis direction.

9. Optical equipment according to any of claims 4 to 7
wherein in an extended state of the optical equipment, the first holding unit and the second holding unit are coupled together in regard to the optical axis direction such that the guide projection and the position restriction part contact with each other; and
wherein when the optical equipment is contracted, the first optical unit and the second optical unit are moved relatively to one another such that the guide projection and the position restriction part are separated from each other in the optical axis direction.

10. Optical equipment according to any preceding claim
wherein, when the optical equipment is contracted, the first holding unit and the second holding unit are moved in a direction of reducing the length of the optical equipment, and the second holding unit contacts a fixed part of the optical equipment.

11. Optical equipment according to any one of claims 1 to 9 further comprising a third holding unit (15) for holding a third optical element (L5) and which is disposed on an image surface side with respect to the second holding unit;
wherein, when the optical equipment is contracted, the second holding unit contacts the third holding unit.

12. Optical equipment according to any preceding claim
further comprising a position adjustment mechanism (19) configured to adjust a position of at least one of the held first optical element and the second optical element in the optical axis direction and in a direction perpendicular to the optical axis direction with respect to a corresponding one of the first holding unit and the second holding unit.
